# EUROPÄISCHE PATENTSCHRIFT

(11) **EP 4 007 516 B1**
(45) Veröffentlichungstag und Bekanntmachung des Hinweises auf die Patenterteilung: **06.09.2023**
(21) Anmeldenummer: 20750630.4
(22) Anmeldetag: 30.07.2020
(51) Int. Cl.: A47J 31/60

(54) **GETRÄNKEZUBEREITUNGSVORRICHTUNG MIT EINER WASCHEINRICHTUNG**
BEVERAGE-MAKING APPLIANCE WITH A WASHING DEVICE
DISPOSITIF DE PRÉPARATION DE BOISSON DOTÉ D'UN ÉQUIPEMENT DE LAVAGE

(30) Priorität: 02.08.2019 AT 506962019
(43) Veröffentlichungstag der Anmeldung: 08.06.2022
(73) Patentinhaber: REDL GmbH, 2020 Hollabrunn (AT)
(72) Erfinder: REDL, Hermann, 2020 Hollabrunn (AT)
(74) Vertreter: Puchberger & Partner Patentanwälte
(86) Internationale Anmeldenummer: PCT/EP2020/071476
(87) Internationale Veröffentlichungsnummer: WO 2021/023611

(56) Entgegenhaltungen:
- WO-A1-2016/146718
- DE-A1-102015 115 418
- US-A1- 2013 140 328

## Beschreibung

Die Erfindung betrifft eine Vorrichtung zur automatisierten Zubereitung von Getränken mit den Merkmalen des Oberbegriffs des unabhängigen Patentanspruchs.

Im Stand der Technik bekannte Getränkezubereitungsvorrichtungen bieten die Möglichkeit, eine Vielzahl von Mischgetränken automatisiert zuzubereiten. An einem Ausgabeelement ist eine Anordnung von mehreren Ausgabeöffnungen vorgesehen, wobei in jede Ausgabeöffnung eine flüssige Zutat für ein Mischgetränk gefördert werden kann. Derartige Vorrichtungen sind insbesondere für die Zubereitung von Cocktails geeignet, da solche Mischgetränke oft eine Vielzahl von einzelnen Zutaten umfassen. Mithilfe einer automatischen Vorrichtung sind eine rasche Zubereitung der Getränke, sowie eine exakte Dosierung der Zutaten möglich. Als Zutaten können alkoholische Getränke, wie etwa Schnäpse oder Liköre, nicht-alkoholische Getränke, wie etwa Säfte, Sirupe, Wasser, Mineralwasser, sowie andere flüssige Zutaten, wie etwa Milch oder Obers eingesetzt werden.

Derartige Zubereitungsvorrichtungen verfügen naturgemäß über eine Vielzahl von Schlauchleitungen, Auslässe und andere flüssigkeitsführende Elemente. Wird eine Vorrichtung über Nacht oder für längere Dauer außer Betrieb genommen, entsteht das Problem, dass Zutaten in den Zuführleitungen und den Ausgabeöffnungen verbleiben können.

Dies ist einerseits besonders bei verderblichen Zutaten, wie etwa bei Milchprodukten, mit hygienischen Herausforderungen verbunden, und kann andererseits insbesondere bei Zutaten mit hohem Zuckergehalt leicht zum Verstopfen von Zuführleitungen und/oder Ausgabeöffnungen führen.

Daher entsteht die Notwendigkeit, die Zubereitungsvorrichtung nach dem Betrieb zu reinigen, was mit einem großen Arbeitsaufwand verbunden sein kann. Die durch Verwendung der Zubereitungsvorrichtung entstandene Zeitersparnis wird durch die aufwändige Reinigungsarbeit wieder reduziert.

Im Stand der Technik ist aus der WO 2016/146718 A1 eine Reinigungsvorrichtung für eine Getränkezubereitungsvorrichtung bekannt, die einen Lösungsbehälter eine Verlagerungseinrichtung, eine Fördereinrichtung und eine Messeinrichtung umfasst. Der Lösungsbehälter kann an die Zapfeinheit der Getränkezubereitungsvorrichtung herangeführt werden, um ein Auswaschen mittels einer Reinigungslösung zu ermöglichen. Nachteilig ist an der Vorrichtung gemäß WO 2016/146718 A beispielsweise, dass die Reinigungslösung gegebenenfalls zu tief in die Getränkezubereitungsvorrichtung vordringt und dennoch kein vollständiges Ausspülen von verbleibendem Getränk erreicht werden kann.

Es ist nun eine Aufgabe der vorliegenden Erfindung, die oben genannten Nachteile des Standes der Technik zu reduzieren oder vollständig zu überwinden.

Die Aufgabe der Erfindung wird durch die kennzeichnenden Merkmale des unabhängigen Patentanspruchs gelöst.

Die Erfindung betrifft eine Vorrichtung zur automatisierten Zubereitung von Getränken umfassend ein Ausgabeelement, welches mehrere Ausgabeöffnungen zur Ausgabe einzelner Getränkezutaten umfasst, sowie eine Wascheinrichtung zur Ausgabe einer Spülflüssigkeit, wobei die Wascheinrichtung in einem Haltebereich entfernt vom Ausgabeelement angeordnet ist.

Erfindungsgemäß ist vorgesehen, dass die Wascheinrichtung aus dem Haltebereich entfernbar ist, und dass am Ausgabeelement ein Aufnahmebereich vorgesehen ist, der zum wenigstens teilweisen Aufnehmen der Wascheinrichtung ausgebildet ist.

Dadurch kann die Wascheinrichtung, wenn sie im Haltebereich angeordnet ist, zum Waschen von Trinkgefäßen, und im Aufnahmebereich zum Spülen des Ausgabeelements verwendet werden. Dies ermöglicht wenigstens das Waschen der außenliegenden Teile des Ausgabeelements und insbesondere der einzelnen Ausgabeöffnungen. Somit ist eine rasche und einfache Grundreinigung des Ausgabeelements möglich, wobei diese Wascheinrichtung für zwei Waschaufgaben verwendet werden kann.

Gegebenenfalls kann vorgesehen sein, dass die Wascheinrichtung ein mechanisch und/oder elektronisch betätigbares Auslassventil, insbesondere ein Rotationsventil, für die Ausgabe der Spülflüssigkeit umfasst. Das Auslassventil kann beispielsweise ein Druckventil oder ein Magnetventil sein. Dadurch ist eine besonders gute Reinigungswirkung der Wascheinrichtung möglich. Soll ein Waschschritt durchgeführt werden, braucht die Wascheinrichtung lediglich manuell gegen das Ausgabeelement gedrückt zu werden.

Gegebenenfalls kann vorgesehen sein, dass der Aufnahmebereich im Wesentlichen kreisförmig ist und die Wascheinrichtung ein vorspringendes, im Wesentlichen kreisförmiges Randelement umfasst, das zum Einführen in den Aufnahmebereich ausgebildet ist.

Dadurch wird eine einfache Verbindung zwischen dem Aufnahmebereich und der Wascheinrichtung ermöglicht. Insbesondere kann durch das Zusammenwirken von Randelement und Aufnahmebereich ein unkontrolliertes Verspritzen der Spülflüssigkeit verhindert werden.

Gegebenenfalls kann vorgesehen sein, dass am freien Ende des Randelements ein das Randelement umlaufendes erstes Dichtelement angeordnet ist. Dadurch kann eine flüssigkeitsdichtende Verbindung zwischen Wascheinrichtung und Ausgabeelement hergestellt werden. Neben der Reduktion von Verschmutzungen durch Verspritzen von Spülflüssigkeit kann dadurch auch die Waschleistung verbessert werden, da die Spülflüssigkeit in Richtung des Ausgabeelements gefördert werden kann.

Gegebenenfalls kann vorgesehen sein, dass im Aufnahmebereich des Ausgabeelements ein magnetisches Halteelement angeordnet ist, welches dazu ausgebildet ist mit wenigstens einem Teil der Wascheinrichtung, insbesondere mit dem Randelement, zusammenzuwirken, oder dass an der Wascheinrichtung, insbesondere am Randelement ein magnetisches Halteelement angeordnet ist, welches dazu ausgebildet ist mit wenigstens einem Teil des Aufnahmebereichs des Ausgabeelements zusammenzuwirken.

Dadurch werden eine lösbare Halterung der Wascheinrichtung am Aufnahmebereich und eine besonders vereinfachte Justierung derselben ermöglicht.

Bevorzugt ist das magnetische Halteelement als Magnetring ausgebildet. Alternativ kann das magnetische Halteelement auch als kreisförmige Anordnung mehrerer einzelner Magnete ausgebildet sein.

Die jeweils entgegengesetzte Seite kann ein magnetisches Element umfassen, welches dazu ausgebildet ist, mit dem magnetischen Halteelement in Wechselwirkung zu treten. Das magnetische Element kann einen magnetischen oder einen ferromagnetischen Stoff umfassen oder daraus bestehen.

Gegebenenfalls kann vorgesehen sein, dass im Aufnahmebereich ein im Wesentlichen kreisförmiges zweites Dichtelement angeordnet ist. Dadurch kann die Dichtwirkung weiter verbessert werden. Insbesondere kann vorgesehen sein, dass das erste Dichtelement und das zweite Dichtelement in der bestimmungsgemäßen Verwendung der Vorrichtung aneinander aufliegen.

Gegebenenfalls kann vorgesehen sein, dass das zweite Dichtelement bei Anordnung der Wascheinrichtung am Aufnahmebereich des Ausgabeelements zwischen dem magnetischen Halteelement und dem Randelement der Wascheinrichtung angeordnet ist.

Dadurch kann sichergestellt werden, dass die Wascheinrichtung immer derart am Ausgabeelement platziert wird, dass eine Dichtwirkung auftritt. So kann auch im Fall eines ungenauen Aneinanderführens der beiden Elemente eine ausreichende Dichtwirkung gewährleistet werden, da die Wascheinrichtung durch die Magnetwirkung in die korrekte Position gebracht wird.

Gegebenenfalls kann vorgesehen sein, dass der Aufnahmebereich durch eine Außenwandung begrenzt ist. Dadurch kann die Schutzwirkung vor einem unkontrollierten Verspritzen weiter erhöht werden.

Bevorzugt ist vorgesehen, dass die Außenwandung an ihrem inneren Umfang eine Abrundung oder eine Fase aufweist. Dadurch wird ein leichtes Einführen der Wascheinrichtung in den Aufnahmebereich ermöglicht. Die Fase oder die Abrundung wirkt als Führungselement beim Annähern der Wascheinrichtung.

Gegebenenfalls kann vorgesehen sein, dass im Ausgabeelement und/oder in der Wascheinrichtung ein Auslasskanal zur Abgabe von überschüssiger Spülflüssigkeit über eine Auslassöffnung vorgesehen ist.

Gegebenenfalls kann vorgesehen sein, dass die Wascheinrichtung im Haltebereich beweglich angeordnet ist und dazu ausgebildet ist, die Spülflüssigkeit auszugeben, wenn sie im Haltebereich angeordnet ist und relativ zum Haltebereich vertikal verschoben wird. Dadurch kann insbesondere die Funktionalität gewährleistet werden, dass die Spülflüssigkeit ausgegeben wird, wenn ein Flüssigkeitsbehälter von oben gegen die Wascheinrichtung gedrückt wird.

Gegebenenfalls kann vorgesehen sein, dass das Auslassventil in Form einer Rotationsdüse ausgebildet ist. Dadurch wird die Reinigungswirkung verbessert, da die Spülflüssigkeit auf jede Stelle des Ausgabeelements direkt auftreffen kann.

Gegebenenfalls kann vorgesehen sein, dass an der Auslassöffnung ein Doppelschlauch mit einem Innenschlauch und einem Außenschlauch angeordnet ist, wobei der Innenschlauch zur Bereitstellung der Spülflüssigkeit, und der Außenschlauch zur Ableitung der Spülflüssigkeit ausgebildet ist. Innenschlauch und Außenschlauch können mit einer externen Spülmittelzufuhr und Flüssigkeitsableitung verbunden sein, die in der Getränkezubereitungsvorrichtung selbst oder außerhalb dieser angeordnet sein kann.

Gegebenenfalls kann vorgesehen sein, dass im Aufnahmebereich des Ausgabeelements zumindest ein, vorzugsweise zwei gegenüberliegende, mit einer Steuereinheit verbundene magnetische Reed-Kontakte angeordnet sind, die dazu ausgebildet sind, mit wenigstens einem Teil der Wascheinrichtung, insbesondere mit dem Randelement, zusammenzuwirken, um der Steuereinheit die vollständige Kopplung der Wascheinrichtung mit dem Aufnahmebereich anzuzeigen.

Beispielsweise kann über ein Lichtsignal, beispielsweise eine LED, angezeigt werden, wenn ein ausreichender Kontakt hergestellt ist. Es kann auch vorgesehen sein, dass die Ausgabe von Spülflüssigkeit erst möglich ist, wenn der Kontakt hergestellt ist. Dadurch kann die unabsichtliche Ausgabe von Spülflüssigkeit vermieden werden. Insbesondere kann die Ausgabe sowie auch Intensität und Dauer der Ausgabe der Spülflüssigkeit durch die Steuereinheit gesteuert werden.

Erfindungsgemäß ist vorgesehen, dass ein Ventilelement vorgesehen ist, welches einen Spülflüssigkeitseingang, einen Zutateneingang und einen mit wenigstens einer Ausgabeöffnung verbundenen Flüssigkeitsausgang umfasst.

Der Spülflüssigkeitseingang mündet in einen Spülflüssigkeitskanal und der Zutateneingang mündet in einen Zutatenkanal. Der Spülflüssigkeitskanal und der Zutatenkanal laufen zu einem gemeinsamen Flüssigkeitskanal zusammen, der in den Flüssigkeitsausgang mündet.

Bevorzugt ist im Zutatenkanal ein Ventil, insbesondere ein Rückschlagventil, vorgesehen, das einen Flüssigkeitsstrom nur vom Zutateneingang in Richtung Flüssigkeitsausgang erlaubt. Bevorzugt ist im Spülflüssigkeitskanal ein Ventil, insbesondere ein Rückschlagventil, vorgesehen, das einen Flüssigkeitsstrom nur vom Spülflüssigkeitseingang in Richtung Flüssigkeitsausgang erlaubt.

Der Zutateneingang kann gegebenenfalls mit Pumpen zur Zufuhr von Zutaten verbunden sein.

Gegebenenfalls ist vorgesehen, dass das Ventilelement ein erstes Ventil umfasst, wobei das erste Ventil derart angeordnet ist, dass in einer ersten Ventilposition der Durchfluss von Flüssigkeit zwischen dem Spülflüssigkeitseingang und Flüssigkeitsausgang verhindert wird oder verhindert werden kann, und in einer zweiten Ventilposition der Durchfluss von Flüssigkeit zwischen dem Spülflüssigkeitseingang und dem Flüssigkeitsausgang freigegeben wird oder freigegeben werden kann.

Gegebenenfalls ist vorgesehen, dass das Ventilelement mit der Steuereinheit verbunden ist, und dass die Steuereinheit dazu ausgebildet ist, das Ventilelement bei vollständiger Kopplung der Wascheinrichtung mit dem Aufnahmebereich die Ventilposition zu ändern, insbesondere das Ventilelement in die zweite Ventilposition zu bringen. Das erste Ventil kann insbesondere ein Magnetventil sein.

Gegebenenfalls ist vorgesehen, dass das Ventilelement einen Eingang und einen Ausgang zur Zu- und Ableitung von Kühlflüssigkeit aufweist.

Gegebenenfalls umfasst ein Ventilelement mehrere Zutateneingänge, die jeweils mit einem eigenen Flüssigkeitsausgang verbunden sein können.

Die Spülflüssigkeit ist bevorzugt reines Wasser, beispielsweise Leitungswasser. Die erfindungsgemäße Vorrichtung kann insbesondere zur groben täglichen Reinigung einer Getränkezubereitungsvorrichtung verwendet werden. Eine Grundreinigung erfolgt üblicherweise in längeren Intervallen auf manuelle Art und Weise.

Gegebenenfalls können mit der Wascheinrichtung ein erster Zulaufschlauch und ein zweiter Zulaufschlauch verbunden sein, sodass unterschiedliche Spülflüssigkeiten verwendet werden können, beispielsweise kaltes Wasser und heißes Wasser. Gegebenenfalls kann die Steuereinrichtung dazu eingerichtet sein, den jeweiligen Zulaufschlauch auszuwählen. Eine Auswahl kann entweder manuell oder automatisch auf Basis der Position der Wascheinrichtung erfolgen.

Gegebenenfalls ist vorgesehen, dass im Aufnahmebereich des Ausgabeelements zumindest ein, vorzugsweise zwei gegenüberliegende, Sensorelemente vorgesehen sind, die dazu ausgebildet sind, mit wenigstens einem Teil der Wascheinrichtung, insbesondere mit dem Randelement , zusammenzuwirken, um einer Steuereinheit die vollständige Kopplung der Wascheinrichtung mit dem Aufnahmebereich anzuzeigen.

Das Sensorelement bzw. die Sensorelemente kann/können als magnetischer Reed-Kontakt ausgebildet sein.

Das Sensorelement bzw. die Sensorelemente kann/können gegebenenfalls alternativ in Form eines anderen geeigneten Sensors ausgebildet sein, der in der Lage ist, die Anordnung der Wascheinrichtung am Aufnahmebereich festzustellen, beispielsweise als optischer Sensor.

Die Verwendung von Sensorelementen in Verbindung mit der Steuereinrichtung kann insbesondere dann vorteilhaft sein, wenn in Abhängigkeit von der Position der Wascheinrichtung unterschiedliche Spülfunktionen eingesetzt werden sollen.

Gegebenenfalls ist vorgesehen, dass die Steuereinheit dazu ausgebildet ist, in Abhängigkeit von der Position der Wascheinrichtung die Temperatur der zur Wascheinrichtung geleiteten Spülflüssigkeit zu steuern und/oder der Wascheinrichtung Spülflüssigkeit unterschiedlicher Temperatur zuzuführen.

Gegebenenfalls ist vorgesehen, dass die Steuereinheit dazu ausgebildet ist, der Wascheinrichtung Spülflüssigkeit mit einer Temperatur zwischen 5°C und 30°C zuzuführen, wenn die Wascheinrichtung mit dem Aufnahmebereich gekoppelt ist. Gegebenenfalls beträgt diese Temperatur zwischen 15°C und 30°C. Gegebenenfalls ist vorgesehen, dass die Steuereinheit dazu ausgebildet ist, der Wascheinrichtung Spülflüssigkeit mit einer Temperatur von über 40°C zuzuführen, wenn die Wascheinrichtung vom Aufnahmebereich beabstandet angeordnet ist. Gegebenenfalls liegt diese Temperatur über 50 °C oder über 60 °C.

Dadurch kann in Abhängigkeit von der Position der Wascheinrichtung die Temperatur der Spülflüssigkeit angepasst werden. Insbesondere kann das Ausgabeelement mit warmen oder heißem Wasser gespült werden, um zuckerhaltige Getränkereste effektiv zu entfernen. Ist die Wascheinrichtung nicht mit dem Ausgabebereich gekoppelt, kann kaltes Wasser ausgegeben werden, um beispielsweise Gläser vor der Verwendung spülen zu können.

Gegebenenfalls können mit der Wascheinrichtung eine erste Spülflüssigkeitszufuhrleitung und eine zweite Spülflüssigkeitszufuhrleitung verbunden sein, wobei die beiden Spülflüssigkeitszufuhrleitungen Spülflüssigkeiten unterschiedlicher Temperatur bereitstellen können.

Weitere Merkmale der Erfindung ergeben sich aus den Patentansprüchen, den Figuren und aus dem Ausführungsbeispiel.

Nachfolgend wird die Erfindung anhand eines exemplarischen Ausführungsbeispiels im Detail erläutert. Das Ausführungsbeispiel dient lediglich der Illustration der Erfindung und soll den Schutzbereich nicht einschränken. Es zeigen:
Fig. 1 eine schematische seitliche Schnittansicht einer Anordnung einer Wascheinrichtung an einem Ausgabeelement;
Fig. 2 eine schematische seitliche Schnittansicht einer erfindungsgemäßen Vorrichtung;
Fig. 3 eine schematische Ansicht des Ausgabeelements von oben;
Fig. 4a ein Ventilelement zur Verwendung mit einer erfindungsgemäßen Vorrichtung in einer perspektivischen Ansicht; und
Fig. 4b eine Schnittansicht des Ventilelements aus Fig. 4a.

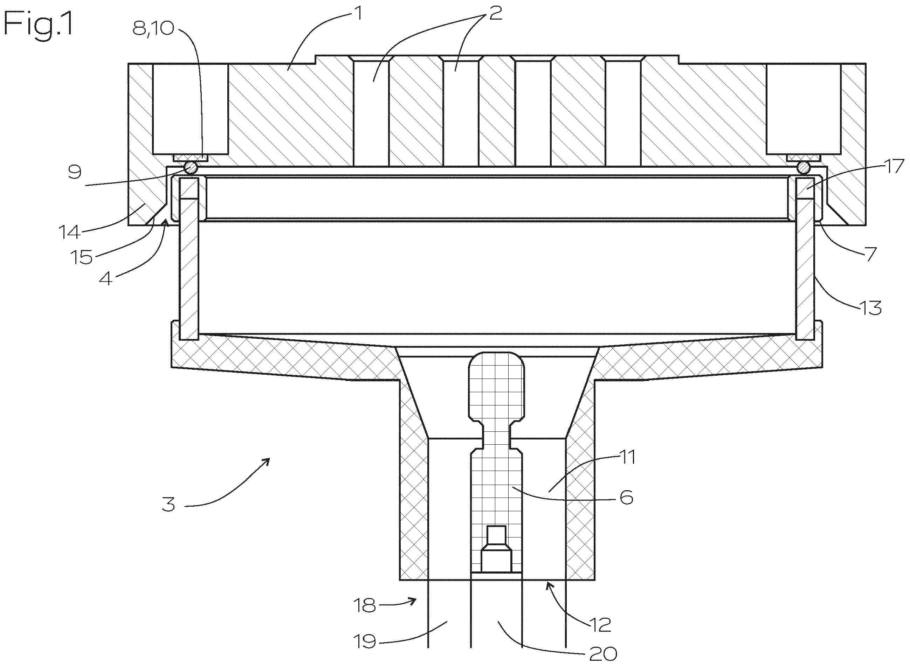

Fig. 1 zeigt eine schematische seitliche Schnittansicht einer Anordnung einer Wascheinrichtung 3 an einem Ausgabeelement 1 gemäß einem Ausführungsbeispiel der vorliegenden Erfindung. Die weiteren, in einer Getränkezubereitungsvorrichtung enthaltenen Elemente sind ist zur Vereinfachung in Fig. 1 nicht dargestellt.

In Fig. 1 ist die Wascheinrichtung 3 am Ausgabeelement 1 der erfindungsgemäßen Vorrichtung angeordnet. In dieser Position kann eine Reinigung des Ausgabeelements 1 durchgeführt werden. Das Ausgabeelement 1 umfasst eine Vielzahl an Ausgabeöffnungen 2, welche über Leitungen mit einzelnen Zutatenbehältern (nicht gezeigt) verbunden sind.

Das Ausgabeelement 1 verfügt über eine radial umlaufende Außenwandung 14, welche an ihrer Innenseite eine Fase 15 aufweist. Die Fase 15 dient der leichteren Einführbarkeit der Wascheinrichtung 3.

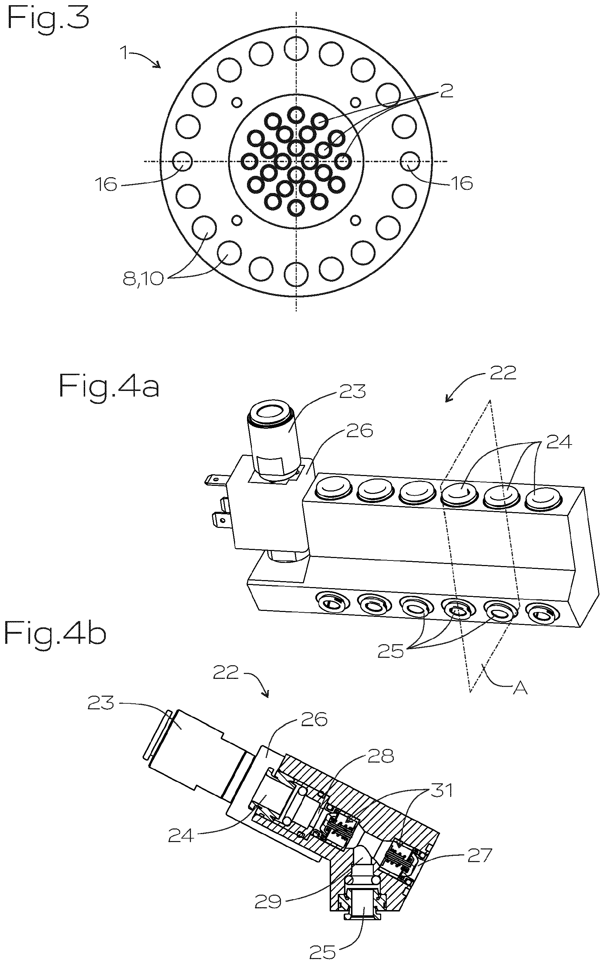

Die Außenwandung 14 umgibt den Aufnahmebereich 4, wobei im Aufnahmebereich 4 ein kreisförmiges Halteelement 8 angeordnet ist. Das Halteelement 8 ist in diesem Ausführungsbeispiel als kreisförmige Anordnung mehrerer Magnete 10 ausgebildet, wie in der weiter unten im Detail beschriebenen Fig. 3 gezeigt.

Zwischen dem Halteelement 8 und der Wascheinrichtung 3 ist ein zweites Dichtelement 9 angeordnet, welches in Form eines kreisförmigen Dichtrings ausgebildet ist.

Die Wascheinrichtung 3 gemäß dem hier gezeigten Ausführungsbeispiel umfasst ein kreisförmiges Randelement 13, das von der Wascheinrichtung 3 vorspringt. Das Randelement 13 verfügt über ein freies Ende, an welchem ein erstes Dichtelement 7 angeordnet ist. Das erste Dichtelement 7 umläuft das freie Ende des Randelements 13 vollständig und ist im Wesentlichen U-förmig ausgebildet.

Das Randelement 13 verfügt an seinem freien Ende über ein magnetisches Element 17, welches in diesem Ausführungsbeispiel als Stahlring ausgebildet ist. Das magnetische Element 17 liegt unter dem ersten Dichtelement. In anderen Ausführungsbeispielen kann das magnetische Element 17 beliebig anders ausgebildet sein, solange es mit den Magneten 10 des Halteelements 8 in Wechselwirkung treten kann. Bevorzugt ist das magnetische Element 17 aus einem magnetischen oder ferromagnetischen Material gebildet oder es umfasst dieses.

Die Wascheinrichtung 3 umfasst ein Auslassventil 6 zum Ausgeben von Spülflüssigkeit. Die Spülflüssigkeit ist in diesem Ausführungsbeispiel Leitungswasser, sie kann jedoch alternativ auch Wasser mit einem reinigenden Zusatz, beispielsweise mit einem Detergens, sein.

Im Bereich des Auslassventils 6 ist ein Auslasskanal 11 angeordnet, welcher zur Ableitung der Spülflüssigkeit ausgebildet ist. Die Spülflüssigkeit kann über den Auslasskanal 11 und die darauf folgende Auslassöffnung 12 abgeleitet werden. An der Auslassöffnung 12 ist ein Doppelschlauch 18 angeordnet, welcher einen Innenschlauch 19 und einen Außenschlauch 20 umfasst. Der Innenschlauch 19 dient der Zuleitung von Spülflüssigkeit, während der Außenschlauch 20 zu deren Ableitung dient.

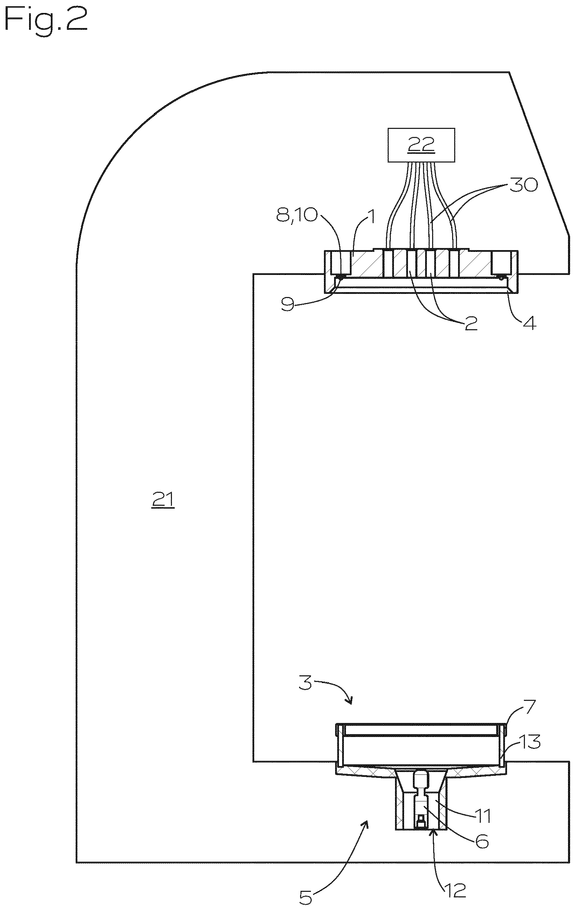

Fig. 2 zeigt eine schematische seitliche Schnittansicht einer erfindungsgemäßen Vorrichtung gemäß dem Ausführungsbeispiel. Im Gegensatz zu Fig. 1 sind das Ausgabeelement 1 und die Wascheinrichtung 3 in dieser Darstellung getrennt voneinander angeordnet; die Wascheinrichtung 3 befindet sich im Haltebereich 5 entfernt vom Ausgabeelement 1. Die Merkmale von Ausgabeelement 1 und Wascheinrichtung 3 werden an dieser Stelle nicht erneut erläutert und entsprechen jenen im Zusammenhang mit Fig. 1 beschriebenen Merkmalen. Zusätzlich ist das Gehäuse 21 der Vorrichtung zu sehen, in welchem Steuereinrichtungen, Verbindungsschläuche und andere Einrichtungen angeordnet sind. Diese Einrichtungen sind zur Vereinfachung hier nicht dargestellt, jedoch ist für einen Fachmann selbstverständlich, um welche Einrichtungen und Elemente es sich handeln kann.

Die jeweils verwendeten Einrichtungen haben keinerlei Einfluss auf die Wirkung der Erfindung und können im Rahmen des allgemeinen Fachwissens beliebig gewählt werden.

Über Schlauchleitungen 30 ist jede Ausgabeöffnung 2 mit einem Ventilelement 22 verbunden, welches in Fig. 4a und Fig. 4b im Detail gezeigt ist. Das Ventilelement 22 dient der Zuführung von Zutaten und von Spülflüssigkeit, um die Ausgabeöffnungen 2 von innen zu reinigen. Die Vorrichtung dieses Ausführungsbeispiels umfasst vier Ventilelemente 22, die in Fig. 1 nicht einzeln dargestellt sind.

Fig. 3 zeigt eine schematische Ansicht des Ausgabeelements 1. Die kreisförmige Außenwandung 14 mit Ihrer Fase 15 umläuft das Ausgabeelement 1. Im Zentralbereich des Ausgabeelements 1 sind Ausgabeöffnungen 2 angeordnet, welche dazu ausgebildet sind, jeweils eine Zutat für ein Mischgetränk auszugeben. Im äußeren Bereich des Ausgabeelements 1 ist das Halteelement 8 angeordnet, welches aus einer Vielzahl an kreisförmig angeordneten Magneten 10 ausgebildet ist. Das Halteelement 8 ist zur Wechselwirkung mit dem Randelement 13, insbesondere mit dem magnetischen Element 17, der Wascheinrichtung 3 ausgebildet, wie vorstehend bereits im Detail erläutert wurde.

Im äußeren Bereich des Ausgabeelements 1 sind weiterhin zwei Reed-Kontakte 16 angeordnet, welche dazu ausgebildet sind, zu erkennen, ob die Wascheinrichtung 3 am Ausgabeelement 1 positioniert ist. In diesem Ausführungsbeispiel wird von der Steuereinrichtung der erfindungsgemäßen Vorrichtung erst bei korrekter Anordnung der Wascheinrichtung 3 die Ausgabe von Spülflüssigkeit freigegeben.

Fig. 4a zeigt ein Ventilelement 22 zur Verwendung mit einer erfindungsgemäßen Vorrichtung in einer perspektivischen Ansicht, während Fig. 4b eine Schnittansicht des Ventilelements aus Fig. 4a entlang der Schnittebene A zeigt.

Das Ventilelement umfasst sechs Zutateneingänge 24, sechs Flüssigkeitsausgänge 25 und einen Spülflüssigkeitseingang 23. Die Zutateneingänge 24 sind über nicht gezeigte Schlauchleitungen mit Zuführeinrichtungen, beispielsweise Pumpen, zur Zufuhr von flüssigen Getränkezutaten verbunden. Jeder Flüssigkeitsausgang 25 ist über eine separate Schlauchleitung 30 mit einer Ausgabeöffnung 2 des Ausgabeelements 1 verbunden. Der Spülflüssigkeitseingang 23 ist über eine nicht gezeigte Schlauchleitung mit einer Spülflüssigkeitszufuhr verbunden.

Im Inneren des Ventilelements 22 mündet jeder Zutateneingang 24 in einen Zutatenkanal 28 und der Spülflüssigkeitseingang 23 mündet in einen Spülflüssigkeitskanal 27. Der Spülflüssigkeitskanal 27 vereint sich mit jedem Zutatenkanal 28 zu einem getrennten Flüssigkeitskanal 29, welcher im Flüssigkeitsausgang 25 endet. Dies erlaubt eine gleichzeitige Spülung jeder Ausgabeöffnung 2 mit Spülflüssigkeit.

Die Zufuhr von Spülflüssigkeit wird über ein erstes Ventil 26 gesteuert, das bevorzugt mit der Steuereinrichtung verbunden ist.

Vor dem Zusammenlauf von Zutatenkanal 28 und Spülflüssigkeitskanal 27 ist jeweils im Zutatenkanal 28 und im Spülflüssigkeitskanal 27 ein Rückschlagventil 31 angeordnet. Diese beiden Rückschlagventile 31 sind so positioniert, dass eine durch den Zutatenkanal 28 strömende Zutat nicht in den Spülflüssigkeitskanal 27 gelangen kann. Umgekehrt kann die durch den Spülflüssigkeitskanal 27 strömende Spülflüssigkeit nicht in den Zutatenkanal 28 gelangen. Sowohl Zutaten als auch die Spülflüssigkeit kann somit nur durch die Ausgabeöffnung 2 austreten und nicht in andere Bereiche eindringen.

Die erfindungsgemäße Vorrichtung umfasst vier Ventilelemente 22, da vierundzwanzig Ausgabeöffnungen 2 vorgesehen sind, die jeweils mit einem eigenen Zutateneingang 24 gekoppelt sind.

### Bezugszeichenliste

- 1: Ausgabeelement
- 2: Ausgabeöffnung
- 3: Wascheinrichtung
- 4: Aufnahmebereich
- 5: Haltebereich
- 6: Auslassventil
- 7: Erstes Dichtelement
- 8: Halteelement
- 9: Zweites Dichtelement
- 10: Magnet
- 11: Auslasskanal
- 12: Auslassöffnung
- 13: Randelement
- 14: Außenwandung
- 15: Fase
- 16: Reed-Kontakt
- 17: Magnetisches Element
- 18: Doppelschlauch
- 19: Innenschlauch
- 20: Außenschlauch
- 21: Gehäuse
- 22: Ventilelement
- 23: Spülflüssigkeitseingang
- 24: Zutateneingang
- 25: Flüssigkeitsausgang
- 26: erstes Ventil
- 27: Spülflüssigkeitskanal
- 28: Zutatenkanal
- 29: Flüssigkeitskanal
- 30: Schlauchleitung
- 31: Rückschlagventil

## Patentansprüche

1. **Vorrichtung** zur automatisierten Zubereitung von Getränken umfassend
- ein Ausgabeelement (1), welches mehrere Ausgabeöffnungen (2) zur Ausgabe einzelner Getränkezutaten umfasst, sowie
- eine Wascheinrichtung (3) zur Ausgabe einer Spülflüssigkeit, wobei die Wascheinrichtung (3) in einem Haltebereich (5) entfernt vom Ausgabeelement (1) angeordnet ist,
wobei die Wascheinrichtung (3) aus dem Haltebereich (5) entfernbar ist, und wobei am Ausgabeelement (1) ein Aufnahmebereich (4) vorgesehen ist, der zum wenigstens teilweisen Aufnehmen der Wascheinrichtung (3) ausgebildet ist, **dadurch gekennzeichnet, dass** ein Ventilelement (22) vorgesehen ist, welches einen Spülflüssigkeitseingang (23), einen Zutateneingang (24) und einen mit wenigstens einer Ausgabeöffnung (2) verbundenen Flüssigkeitsausgang (25) umfasst, wobei der Spülflüssigkeitseingang (23) in einen Spülflüssigkeitskanal mündet und der Zutateneingang (24) in einen Zutatenkanal mündet, und wobei der Spülflüssigkeitskanal und der Zutatenkanal zu einem gemeinsamen Flüssigkeitskanal zusammenlaufen, der in den Flüssigkeitsausgang (25) mündet.

2. Vorrichtung nach Anspruch 1, **dadurch gekennzeichnet, dass** die Wascheinrichtung (3) ein mechanisch oder elektronisch betätigbares Auslassventil (6), beispielsweise ein Druckventil oder ein Magnetventil, für die Spülflüssigkeit umfasst.

3. Vorrichtung nach Anspruch 1 oder 2, **dadurch gekennzeichnet, dass** der Aufnahmebereich (4) im Wesentlichen kreisförmig ist und die Wascheinrichtung (3) ein vorspringendes, im Wesentlichen kreisförmiges Randelement (13) umfasst, das zum Einführen in den Aufnahmebereich (4) ausgebildet ist, und dass gegebenenfalls am freien Ende des Randelements (13) ein das Randelement (13) umlaufendes erstes Dichtelement (7) angeordnet ist.

4. Vorrichtung nach einem der Ansprüche 1 bis 3, **dadurch gekennzeichnet,**
- **dass** im Aufnahmebereich (4) des Ausgabeelements (1) ein magnetisches Halteelement (8) angeordnet ist, welches dazu ausgebildet ist mit wenigstens einem Teil der Wascheinrichtung (3), insbesondere mit dem Randelement (13), zusammenzuwirken, oder
- **dass** an der Wascheinrichtung (3), insbesondere am Randelement (13) ein magnetisches Halteelement (8) angeordnet ist, welches dazu ausgebildet ist mit wenigstens einem Teil des Aufnahmebereichs (4) des Ausgabeelements (1) zusammenzuwirken, und
- **dass** das magnetische Halteelement (8) gegebenenfalls als Magnetring oder als kreisförmige Anordnung mehrerer Magnete (10) ausgebildet ist.

5. Vorrichtung nach einem der Ansprüche 1 bis 4, **dadurch gekennzeichnet, dass** im Aufnahmebereich (4) ein im Wesentlichen kreisförmiges zweites Dichtelement (9) angeordnet ist.

6. Vorrichtung nach Anspruch 5, **dadurch gekennzeichnet, dass** das zweite Dichtelement (9) bei Anordnung der Wascheinrichtung (3) am Aufnahmebereich (4) des Ausgabeelements (1) zwischen dem magnetischen Halteelement (8) und dem Randelement (13) der Wascheinrichtung (3) angeordnet ist.

7. Vorrichtung nach einem der Ansprüche 1 bis 6, **dadurch gekennzeichnet, dass** der Aufnahmebereich (4) durch eine Außenwandung (14) begrenzt ist, wobei die Außenwandung (14) an ihrem inneren Umfang gegebenenfalls eine Abrundung oder eine Fase (15) aufweist.

8. Vorrichtung nach einem der Ansprüche 1 bis 7, **dadurch gekennzeichnet, dass** in der Wascheinrichtung (3) ein Auslasskanal (11) zur Abgabe von überschüssiger Spülflüssigkeit über eine Auslassöffnung (12) vorgesehen ist, und/oder dass die Wascheinrichtung (3) im Haltebereich (5) beweglich angeordnet ist und dazu ausgebildet ist, die Spülflüssigkeit auszugeben, wenn sie im Haltebereich (5) angeordnet ist und relativ zum Haltebereich (5) vertikal verschoben wird.

9. Vorrichtung nach einem der Ansprüche 2 und 3 bis 8 wenn abhängig vom Anspruch 2, **dadurch gekennzeichnet, dass** das Auslassventil (6) in Form einer Rotationsdüse ausgebildet ist.

10. Vorrichtung nach einem der Ansprüche 8 oder 9, **dadurch gekennzeichnet, dass** an der Auslassöffnung (12) ein Doppelschlauch (18) mit einem Innenschlauch (19) und einem Außenschlauch (20) angeordnet ist, wobei der Innenschlauch (19) zur Bereitstellung der Spülflüssigkeit, und der Außenschlauch (20) zur Ableitung der Spülflüssigkeit ausgebildet ist.

11. Vorrichtung nach einem der Ansprüche 1 bis 10, **dadurch gekennzeichnet, dass** im Aufnahmebereich (4) des Ausgabeelements (1) zumindest ein, vorzugsweise zwei gegenüberliegende, Sensorelemente vorgesehen sind, die dazu ausgebildet sind, mit wenigstens einem Teil der Wascheinrichtung (3), insbesondere mit dem Randelement (13), zusammenzuwirken, um einer Steuereinheit die vollständige Kopplung der Wascheinrichtung (3) mit dem Aufnahmebereich (4) anzuzeigen, wobei das Sensorelement gegebenenfalls als magnetischer Reed-Kontakt (16) ausgebildet ist.

12. Vorrichtung nach einem der Ansprüche 1 bis 11, **dadurch gekennzeichnet, dass** das Ventilelement (22) ein erstes Ventil (26) umfasst, wobei das erste Ventil (26) derart angeordnet ist, dass
- in einer ersten Ventilposition der Durchfluss von Flüssigkeit zwischen dem Spülflüssigkeitseingang (23) und Flüssigkeitsausgang (25) verhindert wird oder verhindert werden kann, und
- in einer zweiten Ventilposition der Durchfluss von Flüssigkeit zwischen dem Spülflüssigkeitseingang (23) und dem Flüssigkeitsausgang (25) freigegeben wird oder freigegeben werden kann.

13. Vorrichtung nach Anspruch 12, **dadurch gekennzeichnet, dass** das Ventilelement (22) mit der Steuereinheit verbunden ist, und dass die Steuereinheit dazu ausgebildet ist, das Ventilelement (22) bei vollständiger Kopplung der Wascheinrichtung (3) mit dem Aufnahmebereich (4) die Ventilposition zu ändern, insbesondere das Ventilelement (22) in die zweite Ventilposition zu bringen.

14. Vorrichtung nach einem der Ansprüche 1 bis 13, **dadurch gekennzeichnet, dass** das Ventilelement (22) einen Eingang und einen Ausgang zur Zu- und Ableitung von Kühlflüssigkeit aufweist.

15. Vorrichtung nach einem der Ansprüche 11 bis 14, **dadurch gekennzeichnet, dass** die Steuereinheit dazu ausgebildet ist, in Abhängigkeit von der Position der Wascheinrichtung (3) die Temperatur der zur Wascheinrichtung (3) geleiteten Spülflüssigkeit zu steuern und/oder der Wascheinrichtung Spülflüssigkeit unterschiedlicher Temperatur zuzuführen, wobei die Steuereinheit gegebenenfalls dazu ausgebildet ist
- der Wascheinrichtung (3) Spülflüssigkeit mit einer Temperatur zwischen 5°C und 30°C zuzuführen, wenn die Wascheinrichtung (3) mit dem Aufnahmebereich (4) gekoppelt ist, und
- der Wascheinrichtung (3) Spülflüssigkeit mit einer Temperatur von über 40°C zuzuführen, wenn die Wascheinrichtung (3) vom Aufnahmebereich (4) beabstandet angeordnet ist.

## Claims

1. A device for automated preparation of beverages comprising
- a dispensing element (1) comprising a plurality of dispensing openings (2) for dispensing individual beverage ingredients, and
- a washing device (3) for dispensing a rinsing liquid, the washing device (3) being arranged in a retaining region (5) at a distance from the dispensing element (1),
wherein the washing device (3) can be removed from the retaining region (5), and wherein a receiving region (4) is provided on the dispensing element (1), said receiving region (4) being designed to at least partially receive the washing device (3), **characterised in that** a valve element (22) is provided which comprises a rinsing liquid inlet (23), an ingredient inlet (24) and a liquid outlet (25) connected to at least one dispensing opening (2), wherein the rinsing liquid inlet (23) opens into a rinsing liquid channel and the ingredient inlet (24) opens into an ingredient channel, and wherein the rinsing liquid channel and the ingredient channel converge into a common liquid channel which opens into the liquid outlet (25).

2. The device according to claim 1, **characterised in that** the washing device (3) comprises a mechanically or electronically operable outlet valve (6), for example a pressure valve or a solenoid valve, for the rinsing liquid.

3. The device according to claim 1 or 2, **characterised in that** the receiving region (4) is substantially circular and the washing device (3) comprises a projecting, substantially circular edge element (13) which is designed for insertion into the receiving region (4), and **in that**, optionally, a first sealing element (7) is arranged at the free end of the edge element (13) and surrounds the edge element (13).

4. The device according to one of claims 1 to 3, **characterised**
- **in that** a magnetic retaining element (8) is arranged in the receiving region (4) of the dispensing element (1), said retaining element (8) being designed to interact with at least one part of the washing device (3), in particular with the edge element (13), or
- **in that** a magnetic retaining element (8) is arranged on the washing device (3), in particular on the edge element (13), said magnetic retaining element (8) being designed to interact with at least part of the receiving region (4) of the dispensing element (1), and
- **in that** the magnetic retaining element (8) is optionally designed as a magnetic ring or as a circular arrangement of several magnets (10).

5. The device according to one of claims 1 to 4, **characterised in that** a substantially circular second sealing element (9) is arranged in the receiving region (4).

6. The device according to claim 5, **characterised in that** the second sealing element (9) is arranged between the magnetic retaining element (8) and the edge element (13) of the washing device (3) while the washing device (3) is arranged on the receiving region (4) of the dispensing element (1).

7. The device according to one of claims 1 to 6, **characterised in that** the receiving region (4) is delimited by an outer wall (14), the outer wall (14) optionally having a rounding or a chamfer (15) on its inner periphery.

8. The device according to one of claims 1 to 7, **characterised in that** an outlet channel (11) is provided in the washing device (3) for discharging excess rinsing liquid via an outlet opening (12), and/or **in that** the washing device (3) is movably arranged in the retaining region (5) and is designed to dispense the rinsing liquid when it is located in the retaining region (5) and is displaced vertically relative to the retaining region (5).

9. The device according to one of claims 2 and 3 to 8 if dependent on claim 2, **characterised in that** the outlet valve (6) is in the form of a rotary nozzle.

10. The device according to one of claims 8 or 9, **characterised in that** a double hose (18) with an inner hose (19) and an outer hose (20) is arranged at the outlet opening (12), the inner hose (19) being designed to provide the rinsing liquid and the outer hose (20) being designed to discharge the rinsing liquid.

11. The device according to one of claims 1 to 10, **characterised in that** at least one, preferably two, opposing sensor elements are provided in the receiving region (4) of the dispensing element (1), wherein the sensor elements are designed to interact with at least one part of the washing device (3), in particular with the edge element (13), in order to indicate to a control unit the complete coupling of the washing device (3) with the receiving region (4), wherein the sensor element is optionally designed as a magnetic reed contact (16).

12. The device according to one of claims 1 to 11, **characterised in that** the valve element (22) comprises a first valve (26), the first valve (26) being arranged in such a way that
- in a first valve position, the flow of liquid between the rinsing liquid inlet (23) and liquid outlet (25) is or can be hindered, and
- in a second valve position, the flow of liquid between the rinsing liquid inlet (23) and the liquid outlet (25) is enabled or can be enabled.

13. The device according to claim 12, **characterised in that** the valve element (22) is connected to the control unit, and **in that** the control unit is designed to change the valve position of the valve element (22) when the washing device (3) is fully coupled to the receiving region (4), in particular to move the valve element (22) into the second valve position.

14. The device according to one of claims 1 to 13, **characterised in that** the valve element (22) has an inlet and an outlet for the supply and discharge of cooling liquid.

15. The device according to any one of claims 11 to 14, **characterized in that** the control unit is designed to control the temperature of the rinsing liquid directed to the washing device (3) as a function of the position of the washing device (3) and/or to supply rinsing liquid of different temperature to the washing device, the control unit optionally being designed to
- supply the washing device (3) with rinsing liquid at a temperature between 5 °C and 30 °C when the washing device (3) is coupled to the receiving region (4), and
- to supply the washing device (3) with rinsing liquid at a temperature of over 40 °C when the washing device (3) is arranged at a distance from the receiving region (4).

## Revendications

1. Dispositif pour la préparation automatisée de boissons comprenant
- un élément de distribution (1) comprenant plusieurs ouvertures de distribution (2) pour distribuer des ingrédients de boisson individuels, et
- un dispositif de lavage (3) pour distribuer un liquide de rinçage, le dispositif de lavage (3) étant disposé dans une région de rétention (5) située à distance de l'élément de distribution (1),
le dispositif de lavage (3) pouvant être retiré de la région de rétention (5), et une région de réception (4) étant prévue en correspondance de l'élément de distribution (1), laquelle est conçue pour recevoir au moins partiellement le dispositif de lavage (3), **caractérisé en ce qu'**un élément de soupape (22) est prévu, lequel comprend une entrée de liquide de rinçage (23), une entrée d'ingrédients (24) et une sortie de liquide (25) reliée à au moins une ouverture de distribution (2), l'entrée de liquide de rinçage (23) débouchant dans un canal de liquide de rinçage et l'entrée d'ingrédients (24) débouchant dans un canal d'ingrédients, et le canal de liquide de rinçage et le canal d'ingrédients se rejoignant en un canal de liquide commun qui débouche dans la sortie de liquide (25).

2. Dispositif selon la revendication 1, **caractérisé en ce que** le dispositif de lavage (3) comprend une soupape de sortie (6) actionnable mécaniquement ou électroniquement, par exemple une soupape de pression ou une électrovanne, pour le liquide de rinçage.

3. Dispositif selon la revendication 1 ou 2, **caractérisé en ce que** la région de réception (4) est sensiblement circulaire et le dispositif de lavage (3) comprend un élément de bordure (13) saillant, sensiblement circulaire, qui est conçu pour être introduit dans la région de réception (4), et **en ce que**, le cas échéant, un premier élément d'étanchéité (7) entourant l'élément de bordure (13) est disposé à l'extrémité libre de l'élément de bordure (13).

4. Dispositif selon l'une des revendications 1 à 3, **caractérisé**
- **en ce que** dans la région de réception (4) de l'élément de distribution (1) est disposé un élément de rétention magnétique (8) qui est conçu pour interagir avec au moins une partie du dispositif de lavage (3), en particulier avec l'élément de bordure (13), ou
- **en ce que** sur le dispositif de lavage (3), en particulier sur l'élément de bordure (13), est disposé un élément de rétention magnétique (8) qui est conçu pour interagir avec au moins une partie de la région de réception (4) de l'élément de distribution (1), et
- **en ce que** l'élément de rétention magnétique (8) est réalisé éventuellement sous la forme d'un anneau magnétique ou d'un arrangement circulaire de plusieurs aimants (10).

5. Dispositif selon l'une des revendications 1 à 4, **caractérisé en ce qu'**un deuxième élément d'étanchéité (9) de forme sensiblement circulaire est disposé dans la région de réception (4).

6. Dispositif selon la revendication 5, **caractérisé en ce que**, lorsque le dispositif de lavage (3) est disposé en correspondance de la région de réception (4) de l'élément de distribution (1), le deuxième élément d'étanchéité (9) est disposé entre l'élément de rétention magnétique (8) et l'élément de bordure (13) du dispositif de lavage (3).

7. Dispositif selon l'une des revendications 1 à 6, **caractérisé en ce que** la région de réception (4) est délimitée par une paroi extérieure (14), la paroi extérieure (14) présentant éventuellement un arrondissement ou un chanfrein (15) sur sa périphérie intérieure.

8. Dispositif selon l'une des revendications 1 à 7, **caractérisé en ce qu'**un canal de sortie (11) est prévu dans le dispositif de lavage (3) pour émettre le liquide de rinçage en excès à travers une ouverture de sortie (12), et/ou **en ce que** le dispositif de lavage (3) est disposé de manière mobile dans la région de rétention (5) et est conçu pour distribuer le liquide de rinçage lorsqu'il est disposé dans la région de rétention (5) et est déplacé verticalement par rapport à la région de rétention (5).

9. Dispositif selon l'une des revendications 2 et 3 à 8 si dépendante de la revendication 2, **caractérisé en ce que** la soupape de sortie (6) se présente sous la forme d'une buse rotative.

10. Dispositif selon l'une des revendications 8 ou 9, **caractérisé en ce qu'**un tuyau double (18) avec un tuyau intérieur (19) et un tuyau extérieur (20) est disposé sur l'ouverture de sortie (12), le tuyau intérieur (19) étant conçu pour fournir le liquide de rinçage, et le tuyau extérieur (20) pour évacuer le liquide de rinçage.

11. Dispositif selon l'une des revendications 1 à 10, **caractérisé en ce que** dans la région de réception (4) de l'élément de distribution (1) sont prévus au moins un, de préférence deux, éléments de détection opposés, qui sont conçus pour interagir avec au moins une partie du dispositif de lavage (3), en particulier avec l'élément de bordure (13), afin d'indiquer à une unité de commande le couplage complet du dispositif de lavage (3) avec la région de réception (4), l'élément de détection étant éventuellement conçu comme un contact Reed magnétique (16).

12. Dispositif selon l'une des revendications 1 à 11, **caractérisé en ce que** l'élément de soupape (22) comprend une première soupape (26), la première soupape (26) étant disposée de telle sorte que,
- dans une première position de soupape, le passage de liquide entre l'entrée de liquide de rinçage (23) et la sortie de liquide (25) est empêché ou peut être empêché, et que,
- dans une deuxième position de soupape, le passage de liquide entre l'entrée de liquide de rinçage (23) et la sortie de liquide (25) est libéré ou peut être libéré.

13. Dispositif selon la revendication 12, **caractérisé en ce que** l'élément de soupape (22) est relié à l'unité de commande, et **en ce que** l'unité de commande est conçue pour modifier la position de soupape de l'élément de soupape (22) lorsque le dispositif de lavage (3) est entièrement couplé à la région de réception (4), en particulier pour amener l'élément de soupape (22) dans la deuxième position de soupape.

14. Dispositif selon l'une des revendications 1 à 13, **caractérisé en ce que** l'élément de soupape (22) présente une entrée et une sortie pour l'amenée et l'évacuation du liquide de refroidissement.

15. Dispositif selon l'une des revendications 11 à 14, **caractérisé en ce que** l'unité de commande est configurée pour commander la température du liquide de rinçage amené au dispositif de lavage (3) en fonction de la position du dispositif de lavage (3) et/ou pour amener au dispositif de lavage un liquide de rinçage de température différente, l'unité de commande étant éventuellement conçue
- pour amener au dispositif de lavage (3) un liquide de rinçage à une température comprise entre 5 °C et 30 °C lorsque le dispositif de lavage (3) est couplé à la région de réception (4), et
- pour amener au dispositif de lavage (3) un liquide de rinçage à une température supérieure à 40 °C lorsque le dispositif de lavage (3) est disposé à distance de la région de réception (4).
